(19) Europäisches Patentamt
European Patent Office
Office européen des brevets

(11) EP 1 770 383 B1

(12) **EUROPEAN PATENT SPECIFICATION**

(45) Date of publication and mention
of the grant of the patent:
**13.07.2016 Bulletin 2016/28**

(51) Int Cl.:
***G01L 3/10*** (2006.01)

(21) Application number: **06020567.1**

(22) Date of filing: **29.09.2006**

(54) **Method for manufacturing magnetostrictive torque sensor**

Verfahren zur Herstellung eines magnetostriktiven Drehmomentsensors

Procédé de fabrication d'un capteur de couple magnétostrictif

(84) Designated Contracting States:
**DE**

(30) Priority: **30.09.2005 JP 2005288653**

(43) Date of publication of application:
**04.04.2007 Bulletin 2007/14**

(73) Proprietor: **Honda Motor Co., Ltd.**
**Tokyo 107-8556 (JP)**

(72) Inventors:
• **Kashimura, Yukiya**
**Haga-gun,**
**Tochigi (JP)**
• **Doi, Mizuho**
**Haga-gun,**
**Tochigi (JP)**
• **Harata, Hitoshi**
**Haga-gun,**
**Tochigi (JP)**

• **Fukuda, Yuichi**
**Haga-gun,**
**Tochigi (JP)**
• **Yoshimoto, Nobuhiko**
**Haga-gun,**
**Tochigi (JP)**

(74) Representative: **Weickmann & Weickmann**
**PartmbB**
**Postfach 860 820**
**81635 München (DE)**

(56) References cited:
**EP-A- 1 477 788      WO-A-02/063262**
**JP-A- 1 123 487      JP-A- 2002 082 000**

• **NONOMURA Y ET AL: "Effect of Excitation Magnetic Field on Characteristics of Magnetostrictive Torque Sensors" IEEE TRANSLATION JOURNAL ON MAGNETICS IN JAPAN, IEEE INC, NEW YORK, US, vol. 3, no. 8, 1 August 1990 (1990-08-01), pages 704-710, XP011230564 ISSN: 0882-4959**

**Description**

The present invention relates to a method for manufacturing a magnetostrictive torque sensor, and particularly relates to a method for manufacturing a magnetostrictive torque sensor that is suitable for reducing nonuniformities induced in the sensitivity characteristics of different sensors by magnetizing effects in the various steps, and for increasing the efficiency of assembling the sensor in an electrically powered steering apparatus or the like.

In an electrically powered steering apparatus that is provided as a steering system in an automobile, for example, a steering torque sensor commonly senses a steering torque applied to a steering shaft from a steering wheel by the steering operation of the driver. In the prior art, the steering torque sensor is normally configured from a torsion bar torque sensor, and magnetostrictive torque sensors have recently been proposed. The steering shaft functions as a rotating shaft that rotates due to rotational force from the steering operation. The steering shaft constitutes a rotating shaft in the steering torque sensor. The electrically powered steering apparatus controls the driving of a steering force auxiliary motor according to a torque signal detected from the steering torque sensor, and reduces the steering force for the driver to provide a pleasant steering feel.

As described above, magnetostrictive torque sensors are well known as steering torque sensors used in electrically powered steering apparatuses. In such a magnetostrictive torque sensor, magnetostrictive films that are magnetically anisotropic with respect to each other are formed at two specific locations on the surface of the steering shaft. The magnetostrictive torque sensor has a configuration in which a non-contact system is used to detect changes in the magnetostrictive characteristics of the magnetostrictive films that correspond to the torsion of the steering shaft when torque is applied to the steering shaft from the steering wheel.

In the process for manufacturing a magnetostrictive torque sensor, a magnetostrictive film is formed over the circumferential surface in a specific surface in part of the steering shaft; i.e., over a specific axial width in the rotating shaft; and then a process must be performed to provide this magnetostrictive film with magnetic anisotropy. Conventional methods for providing the magnetostrictive film with magnetic anisotropy in the manufacture of a magnetostrictive torque sensor involve applying a twisting torque to a rotating shaft on which a magnetostrictive plating (magnetostrictive film) is formed by an electroplating process, for example, thus creating stress in the circumferential surface of the rotating shaft. This is followed by heat-treating the rotating shaft in a thermostat while the shaft is kept under stress (see JP 2002-82000 A, for example).

In a conventional method for manufacturing a magnetostrictive torque sensor, electromagnetism acts on the rotating shaft because a device is provided for generating electromagnetic action in an electroplating step for forming magnetostrictive films on the rotating shaft, or in a heating step for creating magnetic anisotropy in the magnetostrictive films formed on the surface of the rotating shaft. As a result, nonuniform irregular magnetization occurs at numerous locations on the surface of the rotating shaft or the surfaces of the magnetostrictive films in these steps. Therefore, in a magnetostrictive torque sensor manufactured by a conventional magnetostrictive torque sensor manufacturing method, the magnetic anisotropy characteristics in the magnetostrictive films have been subject to the effects of irregular magnetization created in the rotating shaft surface or the magnetostrictive film surfaces, resulting in nonuniform sensor sensitivity when torque is sensed. Particularly, since the magnetization in the rotating shaft surface or the magnetostrictive film surfaces is not uniform, problems have arisen with nonuniform torque sensing sensitivity among magnetostrictive torque sensors. When nonuniform torque sensing sensitivity occurs among magnetostrictive torque sensors in this manner, the operator must adjust the sensor sensitivity when a magnetostrictive torque sensor is assembled in an electrically powered steering apparatus. Therefore, the sensitivity of magnetostrictive torque sensors produced by such methods for manufacturing a magnetostrictive torque sensor must be exhaustively tested, and the sensors must be individually adjusted according to the sensitivity characteristics determined by testing when the sensors are assembled in apparatuses.

It can therefore be expected that if the steps of conventional methods for manufacturing magnetostrictive torque sensors are improved and nonuniformities in the sensitivity of completed magnetostrictive torque sensors are resolved, then the step for exhaustively testing sensor sensitivity can be omitted, and the operation of adjusting the sensitivity of the sensors when the sensors are assembled apparatuses can be simplified.

JP 01-123487, on which the preamble of claim 1 is based, discloses sputter-forming magnetic films on a rotating shaft and creating magnetic anisotropy inclinedly in the films. Creating magnetic anisotropy in a magnetic metal requires a large magnetic field and hence a large alternate current magnetic filed for subsequent demagnetization. In contrast, in the claimed invention, a only small amount of unintended magnetization is left in the rotating shaft as a result of electroplating, or as a result of a magnetic operation of an electroplating machine, for forming the magnetostrictive films and hence its demagnetization requires only a small alternate current magnetic field.

Because of the matters described above, a need exists for a method whereby nonuniformities induced in the sensitivity characteristics of different sensors by the steps involved in the methods for manufacturing magnetostrictive torque sensors can be reduced by improving the steps of these manufacturing methods.

A need therefore exists for establishing a method for manufacturing a magnetostrictive torque sensor wherein nonuniformities induced in the sensitivity characteristics of different sensors by the process for manufacturing the magneto-strictive torque sensor are reduced by improving the manufacturing process, the step for exhaustively testing the torque sensing sensitivity if each sensor can be omitted, the load of adjusting the sensor during apparatus assembly can be reduced, and the efficiency of the operation of assembling the sensor in an electrically powered steering apparatus or the like can be increased.

According to the present invention, there is provided a method for manufacturing a magnetostrictive torque sensor comprising the steps of forming magnetostrictive films on a rotating shaft, creating magnetic anisotropy in the magnetostrictive films formed on the rotating shaft, and demagnetizing the rotating shaft, in accordance with claim 1.

The demagnetization step for demagnetizing the rotating shaft allows nonuniform and irregular remanent magnetization to be removed. This type of magnetization is created in the surface of a rotating shaft in the magnetostrictive film formation step or the magnetic anisotropy formation step. The magneto-strictive characteristics of the magnetostrictive films formed on the rotating shaft are thereby not susceptible to the effects of the remanent magnetization in the rotating shaft, and nonuniformities in the sensitivity and other such sensor characteristics can be reduced when the torque is sensed.

Preferably, the demagnetization step comprises initializing remanent magnetization created in the rotating shaft by steps prior to the demagnetization step.

The demagnetization step is carried out after the magnetostrictive film formation step.

Desirably, the method further comprises, after the demagnetization step, providing sensor means around the peripheries of the magnetostrictive films for sensing changes in the magnetostrictive characteristics of the magnetostrictive films as a torque is applied to the rotating shaft. The magnetostrictive torque sensor is completed by adding excitation coils or other such sensor means to the completed rotating shaft.

In the inventive method, the demagnetization step is provided immediately before the step of creating magnetic anisotropy in the magnetostrictive films, and repeated irregular magnetization created in the rotating shaft surface or the magnetostrictive film surfaces by the electroplating step or the magnetic anisotropy formation step are removed to the fullest extent possible. Therefore, effects of irregular magnetization, such as those seen in conventional practice, on the magnetostrictive characteristics of the magnetostrictive films are reduced, and nonuniformities in the sensor sensitivity characteristics during torque sensing are reduced.

Since the torque sensing characteristics of different magnetostrictive torque sensors are made uniform, there is no need for exhaustive testing on the manufactured magnetostrictive torque sensors. As a result, a sampling test is sufficient to test the quality of the magnetostrictive torque sensors, whereby the number of steps in testing the quality of the magnetostrictive torque sensors can be reduced, and the testing process can be accomplished in less time.

Furthermore, since the characteristics of the magnetostrictive torque sensors are made uniform, the quality of the magnetostrictive torque sensors is improved, the sensor sensitivity is more easily adjusted when a magnetostrictive torque sensor is assembled in an electrically powered steering apparatus or the like, the operating load and operating time can be reduced, and operating efficiency can be improved.

A preferred embodiment of the present invention will be described in detail below, by way of example only, with reference to the accompanying drawings, in which:

FIG. 1 is a partial cross-sectional side view showing the basic structure of a magnetostrictive torque sensor manufactured by the method for manufacturing a magnetostrictive torque sensor according to the present invention;

FIG. 2 is a side view schematically showing the basic configuration of the magnetostrictive torque sensor;

FIG. 3 is a fragmentary longitudinal cross-sectional view of a specific structure in which the magnetostrictive torque sensor is incorporated as a steering torque sensor into the steering shaft of an electrically powered steering apparatus;

FIG. 4 is a graph showing the magnetostrictive characteristic curves and sensor characteristics of sensor coils in a magnetostrictive torque sensor;

FIG. 5 is a view showing the process for manufacturing a rotating shaft as part of the method for manufacturing a magnetostrictive torque sensor according to the present invention;

FIG. 6 is a flowchart of the magnetic anisotropy formation step;

FIGS. 7A through 7D are views showing the temperature distribution and torsion distribution in the radial direction in a rotating shaft in the steps of the magnetic anisotropy formation step;

FIG. 8 is a view showing the impedance characteristics of a magnetostrictive torque sensor immediately after magnetostrictive plating parts have been formed, as well as the impedance characteristics of a magnetostrictive torque sensor that uses a magnetically anisotropic magnetostrictive films in the method for manufacturing a magnetostrictive torque sensor according to the present invention;

FIGS. 9A and 9B are schematic views showing the magnetization and other such states of the rotating shaft after the demagnetization step;

FIG. 10 is a perspective view of a demagnetization device for demagnetizing the rotating shaft;

FIG. 11 is a perspective view of a process in which the rotating shaft is demagnetized using the demagnetization device;
FIG. 12 is a graph showing the change over time in a normal magnetic field in the container surface of the demagnetization device;
FIG. 13 is a graph showing the change over time in the magnetic field when the rotating shaft is demagnetized using the demagnetization device;
FIG. 14 is a changing characteristics view showing the change in magnetization in the rotating shaft in relation to the change in the magnetic field; and
FIG. 15 is a graph showing a comparison between the process capability index of a magnetostrictive torque sensor manufactured by a manufacturing method devoid of a demagnetization step, and the process capability index Cp of a magnetostrictive torque sensor manufactured by a manufacturing method provided with a demagnetization step.

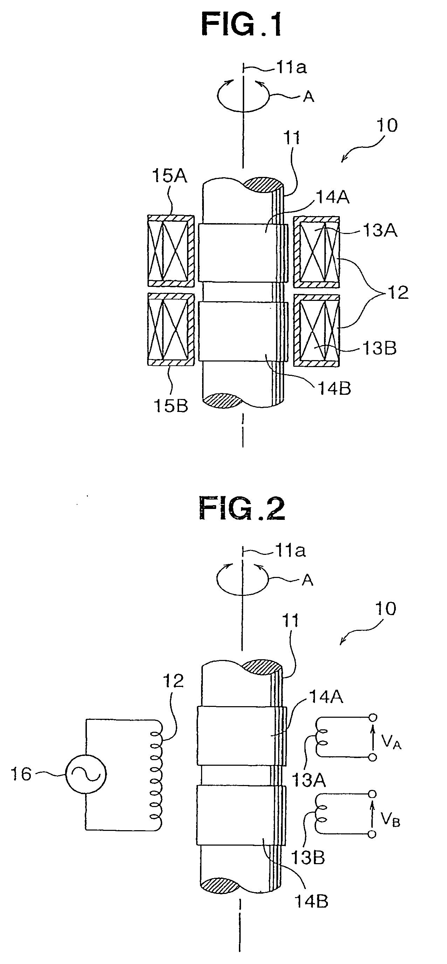

A magnetostrictive torque sensor will be described with reference to FIGS. 1 through 3. FIGS. 1 through 3 show a structural example of a magnetostrictive torque sensor manufactured by the method for manufacturing a magnetostrictive torque sensor according to the present invention.

A magnetostrictive torque sensor 10 is configured from a rotating shaft 11, and one excitation coil 12 and two sensor coils 13A, 13B disposed around the periphery of the rotating shaft 11, as shown in FIGS 1 and 2. For the sake of convenience in the description, the rotating shaft 11 is shown without the top and bottom parts in FIGS. 1 and 2.

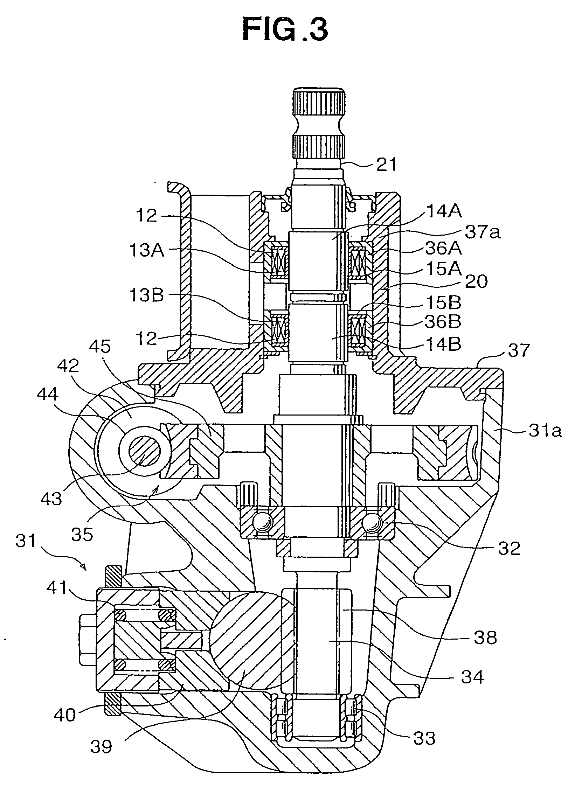

Referring to the example of utilization shown in FIG. 3, the rotating shaft 11 is configured as part of a steering shaft 21, for example. The rotating shaft 11 is subjected to the rotational force (torque) of right-hand rotation (clockwise) or left-hand rotation (counterclockwise) around the axis 11a, as shown by the arrow A. The rotating shaft 11 is formed from a metal rod made of chromium-molybdenum steel (SCM) or the like, for example. Magnetostrictive films 14A, 14B are provided to the rotating shaft 11 at two locations aligned vertically in the axial direction. The magnetostrictive films 14A, 14B both have specific widths in the axial direction of the rotating shaft 11, and also are formed over the entire circumferential periphery of the rotating shaft 11. The width dimension of the magnetostrictive films 14A, 14B and the dimension of the space between the two magnetostrictive films 14A, 14B are arbitrarily set in accordance with certain conditions. In practice, the magnetostrictive films 14A, 14B are formed on the surface of the rotating shaft 11 as magnetostrictive plating parts by an electroplating process. The magnetostrictive films 14A, 14B, which are magnetically anisotropic, are formed by processing the magnetostrictive plating units so that magnetic anisotropy is obtained.

For the sake of convenience in the description below, the terms "magnetostrictive films 14A, 14B" and "magnetostrictive plating parts (14A, 14B)" denote the same items, but are used for different purposes depending on the steps and conditions of manufacturing. In principle, the completed products after magnetic anisotropy has been created are referred to as the "magnetostrictive films 14A, 14B," and prior to this step these parts are referred to as "magnetostrictive plating parts."

The excitation coil 12 and the sensor coils 13A, 13B are provided for both of the two magnetostrictive films 14A, 14B formed on the surface of the rotating shaft 11, as shown in FIG. 1. Specifically, the sensor coil 13A is disposed with an interposed gap from the periphery of the magnetostrictive film 14A, as shown in FIG. 1. The ring-shaped sensor coil 13A encircles the entire periphery of the magnetostrictive film 14A, and the axial width dimension of the sensor coil 13A is substantially equal to the axial width dimension of the magnetostrictive film 14A. Also, the sensor coil 13B is disposed with an interposed gap from the periphery of the magnetostrictive film 14B. The ring-shaped sensor coil 13B similarly encircles the entire periphery of the magnetostrictive film 14B, and the axial width dimension of the sensor coil 13B is substantially equal to the axial width dimension of the magnetostrictive film 14B. Furthermore, a ring-shaped excitation coil 12 is disposed around the peripheries of two sensor coils 13A, 13B. In FIG. 1, ring-shaped excitation coils 12 are illustrated as being provided separately to the magnetostrictive films 14A, 14B, but this is a depiction of two portions of what is actually one excitation coil 12. The sensor coils 13A, 13B and the excitation coil 12 are wound in the peripheral space around the magnetostrictive films 14A, 14B using ring-shaped supporting frames 15A, 15B that are provided to the periphery of the rotating shaft 11 so as to encircle the rotating shaft 11.

In FIG. 2, the excitation coil 12 and the sensor coils 13A, 13B are schematically shown in terms of their electrical relationship to the magnetostrictive films 14A, 14B of the rotating shaft 11. An alternating-current (AC) power source 16 that constantly supplies an AC excitation current is connected to the excitation coil 12 shared by the magnetostrictive films 14A, 14B. Also, induced voltages $V_A$, $V_B$ corresponding to the torque to be detected are outputted from the output terminals of the sensor coils 13A, 13B provided to the magnetostrictive films 14A, 14B, respectively.

The magnetostrictive films 14A, 14B formed on the surface of the rotating shaft 11 are magnetically anisotropic magnetostrictive films formed by an electroplating process using Ni-Fe plating, for example. The two magnetostrictive films 14A, 14B are formed so as to be inversely magnetically anisotropic to each other. When torque is applied to the rotating shaft 11 by a rotational force, the reverse magnetostrictive characteristics produced in the magnetostrictive films 14A, 14B are detected using the sensor coils 13A, 13B disposed around the periphery of the magnetostrictive films 14A, 14B.

The magnetostrictive torque sensor 10 is incorporated as a steering torque sensor into the steering shaft of an electrically powered steering apparatus, for example, as shown in FIG. 3. Elements in FIG. 3 that are substantially identical to those described in FIGS. 1 and 2 are denoted by the same numerical symbols. FIG. 3 shows the specific configuration of a steering torque sensor 20, a supporting structure for a steering shaft 21 (corresponding to the rotating shaft 11), a rack-and-pinion mechanism 34, a drive force transmission mechanism 35, and a steering force auxiliary motor 42.

In FIG. 3, the top of the steering shaft 21 is joined to the steering wheel (not shown) of the vehicle. The bottom of the steering shaft 21 is configured so as to transmit steering force to a vehicle shaft comprising a rack shaft, via the rack-and-pinion mechanism 34. The steering torque sensor 20 provided at the top of the steering shaft 21 is configured using the magnetostrictive torque sensor 10. The steering torque sensor 20 corresponds to the magnetostrictive torque sensor 10, and the portion of the steering shaft 21 on which the magnetostrictive films 14A, 14B are formed corresponds to the rotating shaft 11.

The steering shaft 21 is rotatably supported by two shaft bearings 32, 33 in a housing 31a that forms a gear box 31. The rack-and-pinion mechanism 34 and the drive force transmission mechanism 35 are accommodated inside the housing 31a.

The steering torque sensor 20 is provided for the steering shaft 21. The previously described magnetostrictive films 14A, 14B are formed on the steering shaft 21, and the excitation coil 12 and sensor coils 13A, 13B corresponding to the magnetostrictive films 14A, 14B are supported by the supporting frames 15A, 15B and yokes 36A, 36B.

The top opening of the housing 31a is closed by a lid 37. A pinion 38 provided at the bottom end of the steering shaft 21 is positioned between the shaft bearings 32, 33. A rack shaft 39 is guided by a rack guide 40 and is urged by a compressed spring 41 to press against the side of the pinion 38. The drive force transmission mechanism 35 is formed by a worm gear 44 fixed on a transmission shaft 43 that is joined to the output shaft of the steering force auxiliary motor 42, and also a worm wheel 45 fixed on the steering shaft 21. The steering torque sensor 20 is attached to the interior of a cylindrical part 37a of the lid 37.

The steering torque sensor 20 senses the steering torque applied to the steering shaft 21. The sensed value is inputted to a control apparatus (not shown) and is used as a reference signal for generating a suitable auxiliary steering torque in an electric motor 42. When the steering torque from the steering wheel is applied to the steering shaft 21, the steering torque sensor 20 electrically senses changes in the magnetic characteristics of the magnetostrictive films 14A, 14B that correspond to the torsion in the steering shaft 21. The changes are sensed as changes in the induced voltages $V_A$, $V_B$ from the output terminals of the sensor coils 13A, 13B.

Torsion occurs in the steering shaft 21 when steering torque acts on the steering shaft 21. As a result, a magnetostrictive effect is created in the magnetostrictive films 14A, 14B. Since an excitation electric current is constantly supplied to the excitation coil 12 from the AC power source 16 in the steering torque sensor 20, the change in the magnetic field resulting from the magnetostrictive effect in the magnetostrictive films 14A, 14B is detected by the sensor coils 13A, 13B as a change in the induced voltages $V_A$, $V_B$. According to the steering torque sensor 20, the difference between the two induced voltages $V_A$, $V_B$ is outputted as a detected voltage value on the basis of the change in the induced voltages $V_A$, $V_B$. Therefore, the direction and extent of the steering torque (T) applied to the steering shaft 21 can be sensed based on the outputted voltage ($V_A$ - $V_B$) of the steering torque sensor 20.

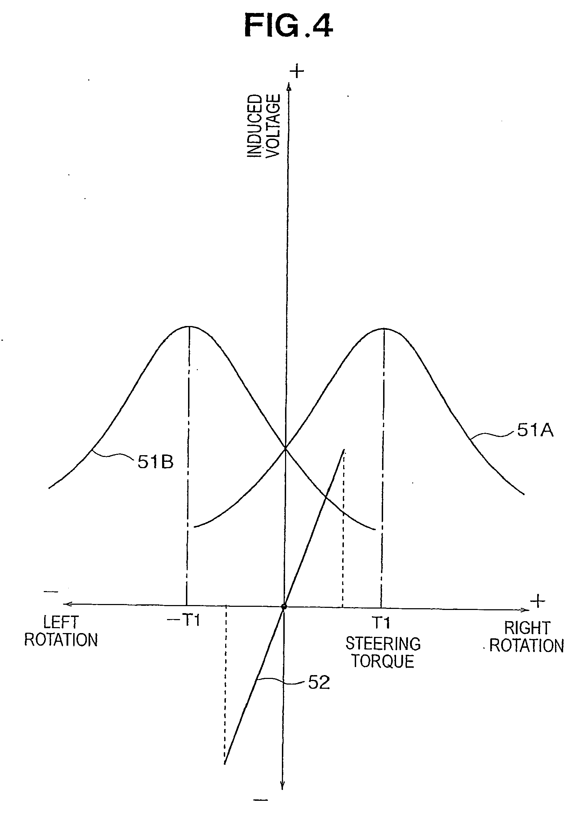

FIG. 4 will now be described in further detail. In FIG. 4, the horizontal axis represents the steering torque applied to the steering shaft 21, wherein the positive side (+) corresponds to right-hand rotation, while the negative side (-) corresponds to left-hand rotation. The vertical axis in FIG. 4 represents a voltage axis.

The magnetostrictive characteristic curves 51A, 51B for the magnetostrictive films 14A, 14B simultaneously show the detection output characteristics of the sensor coils 13A, 13B. Specifically, an excitation AC current is supplied by the shared excitation coil 12 to the magnetostrictive films 14A, 14B that have the magnetostrictive characteristic curves 51A, 51B, and the sensor coils 13A, 13B respond to this excitation AC current by outputting induced voltages. Therefore, the changing characteristics of the induced voltages of the sensor coils 13A, 13B correspond to the magnetostrictive characteristic curves 51A, 51B of the magnetostrictive films 14A, 14B. In other words, the magnetostrictive characteristic curve 51A shows the changing characteristics of the induced voltage $V_A$ outputted from the sensor coil 13A, while the magnetostrictive characteristic curve 51B shows the changing characteristics of the induced voltage $V_B$ outputted from the sensor coil 13B.

According to the magnetostrictive characteristic curve 51A, the value of the induced voltage $V_A$ outputted from the sensor coil 13A increases in a substantially linear fashion as the value of the steering torque changes from negative to positive and approaches the positive steering torque value T1, then peaks when the steering torque reaches the positive value T1, and gradually decreases as the steering torque increases past T1. According to the magnetostrictive characteristic curve 51B, the value of the induced voltage $V_B$ outputted from the sensor coil 13B gradually increases as the value of the steering torque approaches the negative value -T1, then peaks when the steering torque reaches the negative value -T1, and decreases in substantially linear fashion as the steering torque further increases past -T1 and changes from negative to positive.

As shown in FIG. 4, the magnetostrictive characteristic curve 51A pertaining to the sensor coil 13A and the magnetostrictive characteristic curve 51B pertaining to the sensor coil 13B reflect that the magnetostrictive films 14A, 14B are inversely magnetically anisotropic to each other, and have a relationship of substantially linear symmetry about the vertical axis that includes the point where the two magnetostrictive characteristic curves intersect.

The line 52 shown in FIG. 4 indicates a graph that is created based on values obtained in a region that is common to the magnetostrictive characteristic curves 51A, 51B and that has substantially linear characteristics. The values of this line are obtained by subtracting the corresponding values of the magnetostrictive characteristic curve 51B obtained as output voltages of the sensor coil 13B from the values of the magnetostrictive characteristic curve 51A obtained as output voltages of the sensor coil 13A. When the steering torque is zero, the induced voltages outputted from the sensor coils 13A, 13B are equal, and their difference is therefore zero. In the steering torque sensor 20, the line 52 is formed as being a substantially straight line by using the region in the magnetostrictive characteristic curves 51A, 51B that is considered to have a substantially constant slope near the mean point (zero) of the steering torque. The vertical axis in FIG. 4 represents an axis that indicates a voltage difference value for the characteristic graph of the line 52. The line 52, which is a characteristic graph, is a straight line that passes through the origin (0, 0) and lies on the positive and negative sides of both the vertical and horizontal axes. Since the detection output values of the steering torque sensor 20 are obtained as the difference ($V_A$ - $V_B$) between induced voltages outputted from the sensor coils 13A, 13B as previously described, the direction and extent of the steering torque applied to the steering shaft 21 can be detected based on the use of the straight line 52.

As described above, it is possible to obtain a sensor signal that corresponds to the rotational direction and extent of the steering torque inputted to the steering shaft 21 (rotating shaft 11). The signal is obtained based on the output values of the steering torque sensor 20. Specifically, the rotational direction and extent of the steering torque applied to the steering shaft 21 can be known from the sensor values outputted from the steering torque sensor 20.

In other words, the sensor values of the steering torque sensor 20 are outputted as any of the points on the vertical line 52 in accordance with the steering torque. The steering torque is determined to be rotating to the right when the sensor value is on the positive side of the horizontal axis, and the steering torque is determined to be rotating to the left when the sensor value is on the negative side of the horizontal axis. The absolute value of the sensor value on the vertical axis is the extent of the steering torque. Thus, it is possible, with the steering torque sensor 20, to sense the steering torque on the basis of the output voltage values of the sensor coils 13A, 13B by using the characteristics of the vertical line 52.

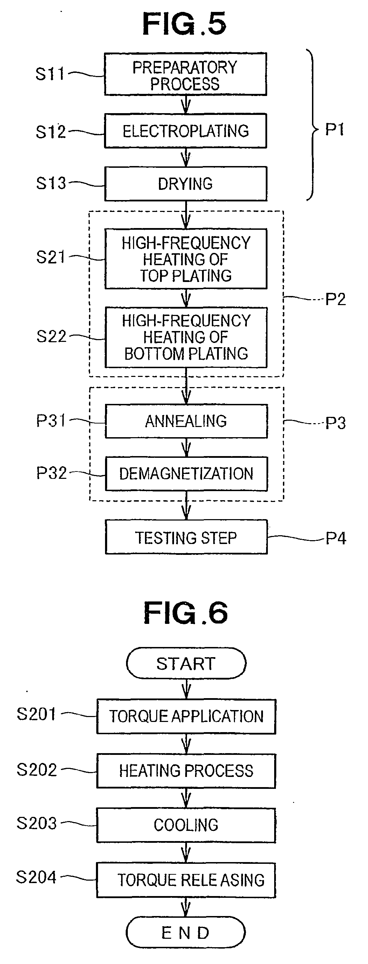

The following is a description, made with reference to FIGS. 5 through 15, of the method for manufacturing the magnetostrictive torque sensor 10 previously described. The main part of the method for manufacturing the magnetostrictive torque sensor 10 in FIG. 5 shows the steps for manufacturing the rotating shaft 11; i.e., the steering shaft 21 of the magnetostrictive torque sensor 10. FIG. 5 primarily shows all the steps for manufacturing the rotating shaft 11.

In FIG. 5, broadly classified, the process for manufacturing the rotating shaft 11 comprises a magnetostrictive film formation step P1, a magnetic anisotropy formation step P2, a characteristic stabilization step P3, and a testing step P4. The characteristic stabilization step P3 comprises an annealing step P31 and a demagnetization step P32. The testing step P4 is a step for inspecting the quality of the manufactured rotating shaft. To complete the magnetostrictive torque sensor 10, a detection device mounting step is provided after the testing step P4, wherein the excitation coil 12, the sensor coils 13A, 13B, and the other detection devices are mounted to the rotating shaft 11.

First, the magnetostrictive film formation step P1 is performed. In the magnetostrictive film formation step P1, magnetostrictive plating parts are formed by electroplating as base portions for the magnetostrictive films at specific locations on the surface of the rotating shaft 11.

In the magnetostrictive film formation step P1, washing or another such preparatory process is first performed on the rotating shaft 11 (step S11). Electroplating is then performed (step S12). This electroplating is performed so that the magnetostrictive material reaches a specific thickness at the top and bottom locations on the rotating shaft 11. The upper and lower magnetostrictive plating parts are formed into magnetically anisotropic magnetostrictive films 14A, 14B by a post-process to be described later. Drying is then performed (step S13).

In the magnetostrictive film formation step P1, according to the invention, an electroplating method is used to form the previously described magnetostrictive films 14A, 14B on the surface of the rotating shaft 11. The base portions that form the magnetostrictive films 14A, 14B on the rotating shaft 11 can also be formed by methods other than electroplating, such as sputtering, ion plating, or another such PVD method; plasma spraying, or the like; however these forming methods are not claimed in the method according to the present invention.

Next, the magnetic anisotropy formation step P2 is performed. The magnetic anisotropy formation step P2 is a step for creating magnetic anisotropy in the magnetostrictive plating parts formed.at the two top and bottom locations on the rotating shaft 11, thus forming the previously described magnetostrictive films 14A, 14B. The magnetic anisotropy formation step P2 has a step S21 of high-frequency heating performed on the top magnetostrictive plating part, and a step S22 of high-frequency heating performed on the bottom magnetostrictive plating part.

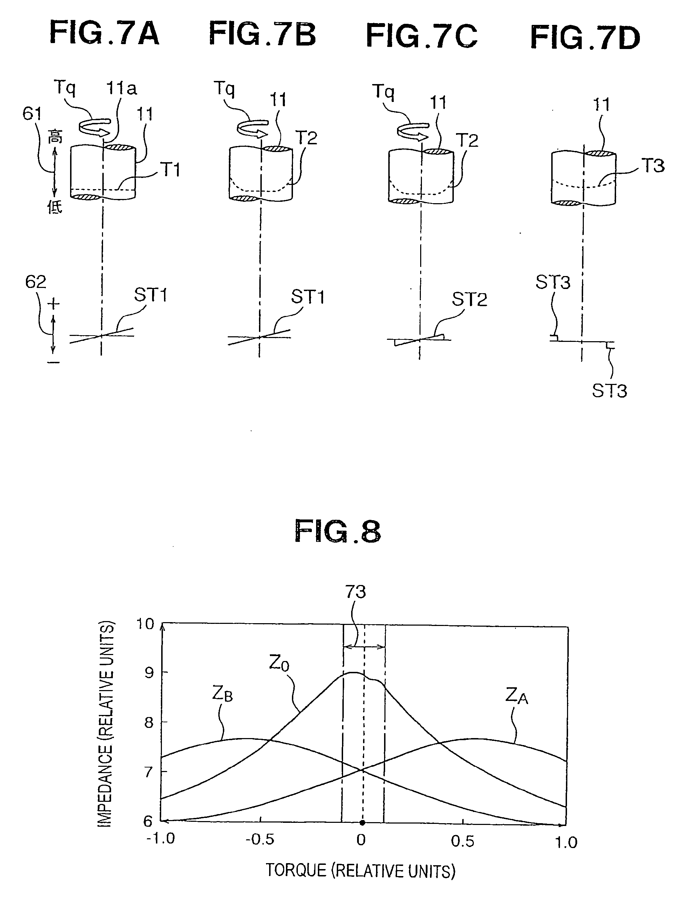

FIG. 6 shows a flowchart of the processing steps performed in steps S21 and S22 in the magnetic anisotropy formation step P2. FIGS. 7A through 7D are views showing the temperature distribution in the axial and radial direction, and the torsion distribution in the axial and radial direction, in the magnetostrictive plating parts on the rotating shaft 11 in steps S21 and S22 in the magnetic anisotropy formation step P2.

As shown in FIG. 6, step S21 of the high-frequency heating of the top magnetostrictive plating part in the magnetic anisotropy formation step P2 comprises step S201, which is performed first to apply a specific twisting torque to the rotating shaft 11 via a torque application device; a heating step S202 performed next to heat the top magnetostrictive plating part of the rotating shaft 11 by magnetic induction, wherein high frequency waves are supplied for a specific amount of time while the specific twisting torque is being applied; a subsequently performed step S203 of naturally cooling the heated rotating shaft 11; and the finally performed torque releasing step S204 of creating magnetic anisotropy in the top magnetostrictive plating part by releasing the twisting torque, thus forming the magnetostrictive film 14A.

In the heating step S202, an induction heating coil is placed on the top magnetostrictive plating part of the rotating shaft 11, and specific high-frequency waves are supplied to this induction heating coil from a high-frequency power source to perform high-frequency heating on only the top magnetostrictive plating part.

Magnetic anisotropy is created in the top magnetostrictive plating part of the rotating shaft 11 in steps S201 through S204, whereby a magnetically anisotropic magnetostrictive film 14A is formed.

The steps S201 through S204 are similarly performed in the high-frequency heating step S22 for the bottom magnetostrictive plating part of the rotating shaft 11, creating magnetic anisotropy in the bottom magnetostrictive plating part, whereby a magnetically anisotropic magnetostrictive film 14B is formed. In this case, magnetic anisotropy is created in the bottom magnetostrictive plating part, whereupon the direction in which torque is applied to the rotating shaft 11 is reversed so as to achieve inverse magnetic anisotropy in the magnetostrictive film 14B.

The following is a description, made with reference to FIGS. 7A through 7D and to FIG. 8, of the mechanism whereby magnetic anisotropy is created in the magnetostrictive plating parts, and the magnetostrictive film 14A is formed in the magnetic anisotropy formation step P2.

FIGS. 7A through 7D show the temperature distribution in the radial direction of the rotating shaft 11 at the top of the view, and the torsion distribution in the radial direction of the rotating shaft 11 at the bottom of the view. FIGS. 7A through 7D also show a state of torque application (FIG. 7A), a state of induction heating (FIG. 7B), a state of releasing plating torsion (FIG. 7C), and a state of releasing torque (FIG. 7D), respectively. The state of torque application (FIG. 7A) corresponds to step S201 shown in FIG. 6, the state of induction heating (FIG. 7B) corresponds to step S202 in the same view, the state of releasing the plating torsion (FIG. 7C) corresponds to step S203 in the same view, and the state of releasing the torque (FIG. 7D) corresponds to step S204 in the same view. The axis 61 in FIG. 7A indicates temperature, and the axis 62 indicates torsion. The axis 61 that expresses temperature and the axis 62 that expresses torsion are used in the same manner in FIGS. 7B through 7D.

In FIG. 7A, a twisting torque Tq is applied to the rotating shaft 11, and stress is created in the circumferential surface of the rotating shaft 11. The twisting torque Tq is thereby applied. In this case, the torsion distribution in the radial direction of the rotating shaft 11 is a distribution ST1 that increases outward towards the periphery away from the axis 11a in the middle of the rotating shaft 11. In the distribution ST1, the direction of the torsion distribution is opposite on the right and left sides of the axis 11a, and therefore the torsion distribution on the right side is shown as positive (+), and the torsion distribution on the left side is shown as negative (-). Furthermore, the temperature distribution in the radial direction of the rotating shaft 11 in FIG. 7A is shown by the broken line, and is a constant distribution T1 at room temperature from the axis 11a of the rotating shaft 11 outward to the periphery. This room temperature is a reference for the temperature of the rotating shaft 11.

In FIG. 7B, while twisting torque Tq is being applied to the rotating shaft 11, the periphery of the magnetostrictive plating part is placed inside an induction heating coil, a high-frequency electric current is supplied to the induction heating coil, and the magnetostrictive plating part is heated. In FIG. 7B, the torsion distribution in the radial direction of the rotating shaft 11 is the same as in FIG. 7A. Also, the temperature distribution in the radial direction of the rotating shaft 11 is a distribution T2 wherein the temperature abruptly increases towards the outer peripheral edge of the rotating shaft 11 from a point near the outer peripheral edge.

In FIG. 7C, cooling is performed, causing cleaving to occur in the magnetostrictive plating part, and the torsion in the magnetostrictive plating part to reach zero. The torsion distribution in the radial direction of the rotating shaft 11 at this time is shown by the numerical symbol ST2. The step showing the state in FIG. 7C is step S203 of naturally cooling after the heating process. There is no substantial change in the shape of the temperature distribution T2 in the radial direction of the rotating shaft 11, and the temperature decreases as a whole as cooling proceeds.

In FIG. 7D, torque is released, wherein the twisting torque Tq applied to the rotating shaft 11 is released after cooling. The torsion distribution in the radial direction of the rotating shaft 11 thereby reaches zero, as shown by the torsion distribution ST3. Conversely, a torsion distribution is seen only in the magnetostrictive plating part as shown by the torsion distribution ST3. As a result, magnetic anisotropy can be created in the magnetostrictive plating part by means of this torsion distribution ST3, and a magnetostrictive film 14A having magnetic anisotropy can thereby be formed. The temperature distribution in FIG. 7D is reduced so as to generally be smoothly distributed, as shown by T3.

When the magnetostrictive film 14B is created, the process previously described is performed by applying a clockwise twisting torque in the opposite direction of the twisting torque Tq to create magnetic anisotropy in the opposite direction of the magnetostrictive film 14A.

FIG. 8 shows the impedance characteristics $Z_0$ of the magnetostrictive plating parts provided at the two top and bottom locations on the rotating shaft 11, and the impedance characteristics $Z_A$, $Z_B$ of the magnetostrictive films 14A, 14B formed by creating magnetic anisotropy in the magnetostrictive plating parts. In FIG. 8, the horizontal axis represents torque (relative units), and the vertical axis represents impedance (relative units). The impedance characteristics Zo of the magnetostrictive plating parts prior to the creation of magnetic anisotropy change to the impedance characteristics $Z_A$ in the case of the magnetostrictive film 14A, and to the impedance characteristics $Z_B$ in the case of the magnetostrictive film 14B. The change is brought about by the creation of magnetic anisotropy. Since the magnetostrictive film 14A has the impedance characteristics $Z_A$, the sensor coil 13A corresponding to the magnetostrictive film 14A has the previously described magnetostrictive characteristic curve 51A. Also, since the magnetostrictive film 14B has the impedance characteristics $Z_B$, the sensor coil 13B corresponding to the magnetostrictive film 14B has the previously described magnetostrictive characteristic curve 51B.

In FIG. 8, the range 73 is a range wherein the impedance characteristics $Z_A$ and $Z_B$ overlap, and substantially linear changes are obtained. This range 73 is used as the usable range of the magnetostrictive torque sensor 10.

The characteristic stabilization step P3 is performed after the magnetic anisotropy formation step P2. In the characteristic stabilization step P3, first the annealing step P31 is performed. In the annealing step P31, a heating process is performed for a specific amount of time at a temperature equal to or greater than the service temperature under conditions in which the steering torque sensor 20 is used, for example. This annealing step P31 is not absolutely necessary and can be omitted.

The demagnetization step P32 is performed after the annealing step P31. The demagnetization step P32 is a step for applying an AC magnetic field to the rotating shaft 11 to remove the magnetization created in the surface of the rotating shaft 11. As a result of the demagnetization step P32, all of the magnetized portions created in the entire surface of the rotating shaft 11 (including the surfaces of the magnetostrictive films 14A, 14B) are demagnetized, and remanent magnetization is initialized.

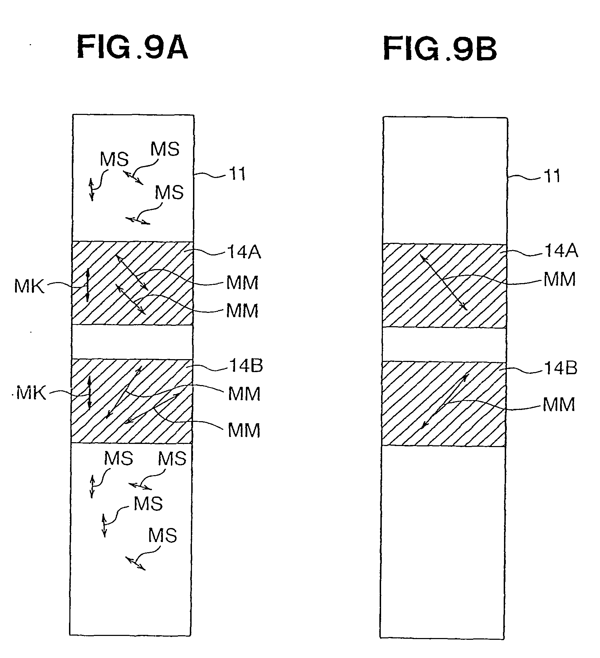

In the previously described magnetostrictive film formation step P1, various electromagnetic generation devices are provided to electrolytic degreasing or another preparatory step S11, the electroplating step S12, step P2 for endowing the magnetostrictive plating parts with magnetic anisotropy, or another production process. Therefore, numerous unplanned magnetized parts MS are formed in the surface of the rotating shaft 11 (including the surface of the magnetostrictive films) as shown, for example, in FIG. 9A. In FIG. 9A, in the stage prior to the demagnetization step P32, numerous magnetized parts MS and strains MK are created in the surface of the rotating shaft 11, as are magnetically anisotropic parts MM scattered across the surface of the magnetostrictive films 14A, 14B of the rotating shaft 11. The magnetically anisotropic parts MM, the magnetized parts MS, and the strains MK are formed in an irregular manner.

The presence of magnetized parts MS and the like in the rotating shaft 11 in an irregular manner causes the magnetostrictive characteristics of the magnetostrictive films 14A, 14B to become affected in an unstable manner when changes occur in the magnetostrictive characteristics in accordance with the applied torque. If this rotating shaft 11 is used in a magnetostrictive torque sensor 10, the sensitivity of the magnetostrictive torque sensor 10 becomes unstable. Since the rotating shaft 11 is irregularly magnetized during the manufacturing process for the various reasons described above, the state in which the magnetized parts MS and the like are created differs for each rotating shaft 11, nonuniformities occur among rotating shafts 11, and nonuniformities also occur in the output sensitivity of the magnetostrictive torque sensors 10.

In view of this, the rotating shaft 11 is demagnetized in the demagnetization step P32 in the state described above. The state of the rotating shaft 11 after demagnetization is as shown in FIG. 9B. In the demagnetized rotating shaft 11, the magnetized parts MS and the strains MK present in the surface are initialized, and inversely magnetically anisotropic parts MM having stable sensor output sensitivity are formed in each of the two magnetostrictive films 14A, 14B. As a result, the previously described problems of unstable sensor sensitivity and nonuniformities in the sensor output sensitivity are resolved.

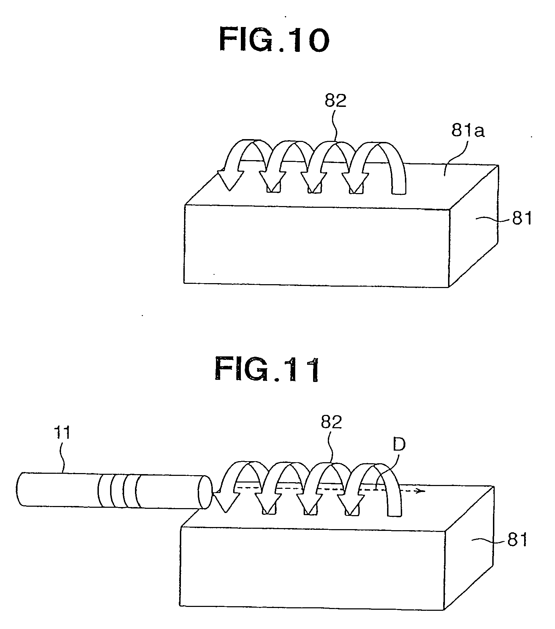

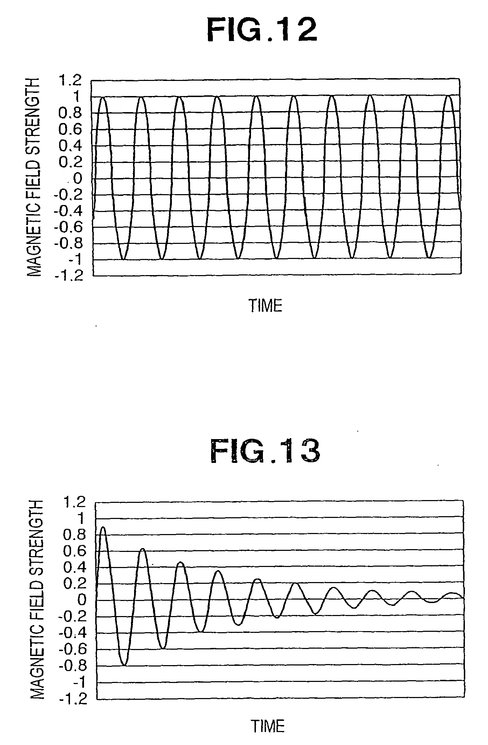

The demagnetization device 81 shown in FIG. 10 is used to demagnetize the rotating shaft 11. An AC magnetic field generator is disposed inside the demagnetization device 81. An AC magnetic field 82 is generated from the container surface 81a of the demagnetization device 81 by this AC magnetic field generator. A known example of the demagnetization device 81 is a capacitor-type demagnetization power source device that has a resonance circuit configured from a capacitor and a coil. Typical variations over time in the strength of the AC magnetic field 82 are shown in FIG. 12. In FIG. 12, the horizontal axis represents time, and the vertical axis represents magnetic field strength. Variations in magnetic field strength in a normal AC magnetic field 82 are AC variations having a constant amplitude.

When the rotating shaft 11 is demagnetized using a demagnetization device 81 as described above, the shaft is moved parallel to the container surface 81a of the demagnetization device 81 in the direction of the arrow D relative to the region in which the AC magnetic field 82 is created, as shown in FIG. 11. The AC magnetic field 82 initially has the state shown in FIG. 11 when the rotating shaft 11 is demagnetized, but is finally varied so that the amplitude of the

EP 1 770 383 B1

AC magnetic field 82 gradually decreases as shown in FIG. 13.

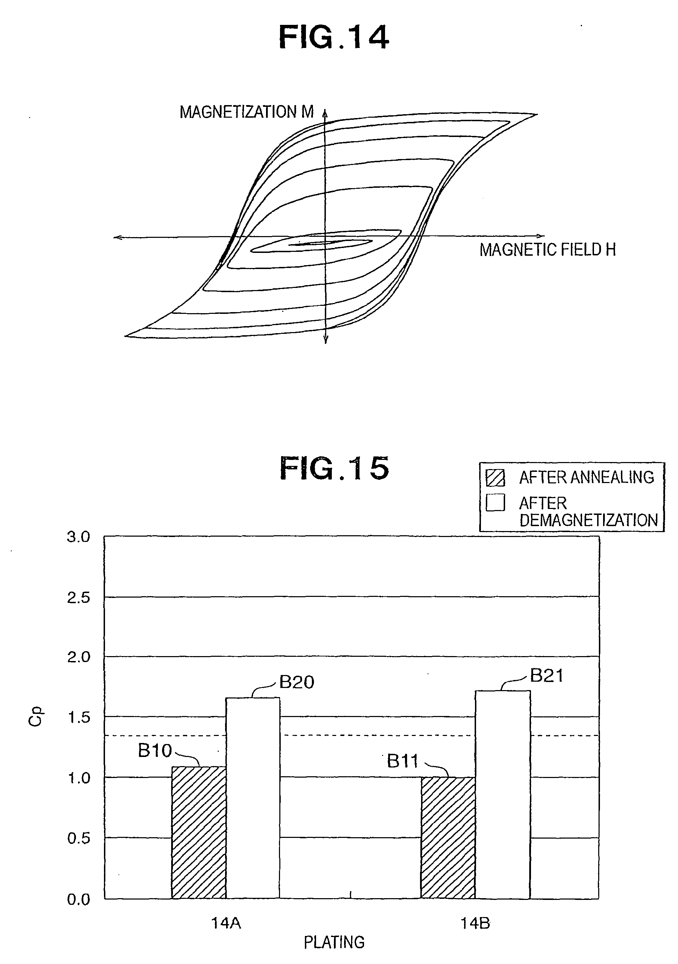

When the AC magnetic field 82 gradually decreases and the surface of the rotating shaft 11 is demagnetized, the magnetized state of the irregular magnetized parts MS in the surface of the rotating shaft 11 varies and decreases as shown in FIG. 14. As the amplitude of the AC magnetic field 82 decreases, the magnetized strength of the magnetized parts MS of the rotating shaft 11 gradually approaches zero over time in accordance with the hysteretic characteristics. As a result of the demagnetization step P32, the magnetized state of the magnetized parts MS created in the rotating shaft 11 reaches zero as shown in FIG. 9B, and the irregular magnetized parts and strains created in the rotating shaft 11 in the magnetostrictive film formation step P1 are demagnetized. Stable characteristics can thereby be maintained in the magnetically anisotropic parts MM of the magnetostrictive films 14A, 14B formed on the rotating shaft 11, and nonuniformities in the sensor sensitivity during torque sensing be reduced.

In the example described above, the demagnetization step P32 is provided after the magnetic anisotropy formation step P2, but, according to the invention, the demagnetization step P32 is provided after the magnetostrictive film formation step P1. Furthermore, the demagnetization step P32 may be performed any number of times in any steps after reheating to alleviate stress. Performing the demagnetization step P32 after reheating to alleviate stress is preferred because there is no danger of magnetization in the subsequent steps, and the magnetization created in the previous steps can be completely eliminated; i.e., initialized.

The demagnetization step P32 is followed by the testing step P4, which is performed as sampling testing.

A sensor mounting step P5 for mounting excitation coils or other such sensors is provided thereafter, wherein sensor devices for sensing changes in the magnetostrictive characteristics are placed around the peripheries of the magneto-strictive films 14A, 14B of the rotating shaft 11. The magnetostrictive torque sensor 10 is completed by the steps described above.

The following is a description of the test results pertaining to nonuniformities in the sensor characteristics of a magnetostrictive torque sensor 10 manufactured by the previously described method for manufacturing a magnetostrictive torque sensor.

The test of nonuniformities in the sensor characteristics of the magnetostrictive torque sensor 10 involves using, as samples, ten rotating shafts manufactured by a conventional manufacturing method devoid of the demagnetization step P32, and also ten rotating shafts (11) manufactured by the manufacturing method of the present invention that does have the demagnetization step P32. A comparison of the results of two tests will now be described.

Table 1 below shows the standard deviation ($\sigma$) of "sensor sensitivity." In Table 1, the word "without" in the "demagnetization step" column indicates that the demagnetization step P32 is not used, and the word "with" in the "demagnetization step" column indicates that the demagnetization step P32 is used. The symbols 14A and 14B in the "plating" column correspond to the magnetostrictive films 14A, 14B shown in FIG. 1. The words "sensor sensitivity" refer to the value obtained by dividing the amount of change in impedance per 1 N m of input torque in the input torque impedance characteristics by "0-point Z," which is the impedance value when the input torque is 0. Also, in Table 1, the standard deviation ($\sigma$) of sensor sensitivity is 1, referring to the value without the demagnetization step, and the values for when the demagnetization step is used are expressed as ratios. As is made clear in Table 1, the standard deviation ($\sigma$) of "sensor sensitivity" of a sample manufactured by a manufacturing method without the demagnetization step P32 is 1, while the standard deviation ($\sigma$) of "sensor sensitivity" of a sample manufactured by a manufacturing method with the demagnetization step is smaller, at 0.658 and 0.591. Therefore, it is clear that nonuniformities are smaller for the sensor sensitivity of a magnetostrictive torque sensor that uses a rotating shaft manufactured by the manufacturing method having the demagnetization step P32 than for the sensor sensitivity of a magnetostrictive torque sensor that uses a rotating shaft manufactured by a manufacturing method devoid of the demagnetization step P32.

Table 1

| Demagnetization step | Plating | Sensor sensitivity $\sigma$ |
|---|---|---|
| without | 14A | 1.000 |
| | 14B | 1.000 |
| with | 14A | 0.658 |
| | 14B | 0.591 |

Table 2 below shows a process capability index Cp related to the sensor sensitivity of a magnetostrictive torque sensor that uses a rotating shaft manufactured by a manufacturing method devoid of the demagnetization step P32, as well as a magnetostrictive torque sensor that uses a rotating shaft manufactured by a manufacturing method provided with the demagnetization step P32.

9

Table 2

| Demagnetization step | Plating | Sensor sensitivity Cp |
|---|---|---|
| without | 14A | 1.09 |
| | 14B | 1.01 |
| with | 14A | 1.66 |
| | 14B | 1.72 |

In Table 2, the "demagnetization step" column and the "plating" column have the same contents as those in Table 1 above. Also, the term "process capability index Cp" refers to an index by which evaluations are made as to the degree in which the quality of the products made from the manufacturing steps conforms to standards. This index expresses the extent to which nonuniformities occur in the above-described steps in relation to a standard step. Furthermore, the "process capability index Cp" is given by the following formula (1).

$$\mathrm{Cp} = (\text{standard upper limit} - \text{standard lower limit})/6\sigma \qquad \cdots (1)$$

It is generally acknowledged that process capability is satisfactory if the process capability index Cp satisfies the relationship 1.33 < Cp < 1.67, and not necessarily satisfactory when Cp < 1.33. The values in Table 2 above are obtained by calculating the sensor sensitivity (Table 1) for ten rotating shaft samples manufactured by a conventional manufacturing method devoid of the demagnetization step P32 as previously described, and for ten rotating shaft samples manufactured by the manufacturing method of the present invention provided with the demagnetization step P32; setting the standard upper limit and standard lower limit on the basis of these sensitivity values; and calculating the values according to the above formula (1).

As is made clear in Table 2, the process capability index Cp of a magnetostrictive torque sensor that uses a rotating shaft manufactured by a manufacturing method devoid of the demagnetization step P32 is less than 1.33 in terms of sensor sensitivity. Therefore, it is apparent that a manufacturing method devoid of the demagnetization step P32 does not necessarily have satisfactory process capability. The process capability index Cp of a magnetostrictive torque sensor that uses a rotating shaft manufactured by the manufacturing method of the present invention provided with the demagnetization step P32 is greater than 1.33 in terms of sensor sensitivity, and it is clear that this sensor has satisfactory process capability.

FIG. 15 shows a bar graph of the process capability indexes Cp of sensor sensitivity in Table 2. The horizontal axis represents the type of plating, and the vertical axis represents the process capability index Cp. The graphs B10 and B11 pertain to a magnetostrictive torque sensor that uses a rotating shaft manufactured by a manufacturing method devoid of the demagnetization step. The graphs B20 and B21 pertain to a magnetostrictive torque sensor that uses a rotating shaft manufactured by a manufacturing method provided with the demagnetization step.

The process capability index Cp for sensor sensitivity in a magnetostrictive torque sensor manufactured by a manufacturing method devoid of the demagnetization step is less than 1.33, as shown in FIG. 15. Therefore, this manufacturing method does not necessarily have satisfactory process capability. The process capability index Cp for sensor sensitivity in a magnetostrictive torque sensor manufactured by the manufacturing method of the present invention is greater than 1.33, and it is clear that this method has satisfactory process capability.

As shown in Table 2 and in FIG. 15, the process capability index Cp for sensor sensitivity in a magnetostrictive torque sensor manufactured by a manufacturing method provided with the demagnetization step P32 according to the present invention is greater than 1.33, which is a satisfactory process capability, making exhaustive testing unnecessary. Quality can be assured by a sampling test. Therefore, the number of steps can be reduced.

Thus, according to the present invention, nonuniformities in the characteristics of the magnetostrictive torque sensor can be reduced, the number of steps can be reduced, and quality can be improved because magnetization and the like induced in the rotating shaft by various conditions in the manufacturing process can be initialized.

The present invention can be used as a method for manufacturing a magnetostrictive torque sensor for sensing the steering torque in an electrically powered steering apparatus or the like.

**Claims**

1. A method for manufacturing a magnetostrictive torque sensor, comprising the steps of:

forming, by electroplating, magnetostrictive films (14A, 14B) on a rotating shaft (11) of the magnetostrictive sensor; and

creating magnetic anisotropy in the magnetostrictive films (14A, 14B) formed on the rotating shaft (11) by heating for a predetermined time the magnetostrictive films (14A,14B) with a predetermined twisting torque (Tq) applied to the films and then releasing the twisting torque;

**characterized in that** the method further comprises, after the magnetostrictive films forming step (P1) and before the magnetic anisotropy creating step (P2), the step (P32) of demagnetizing the rotating shaft (11).

2. The method of claim 1, wherein the demagnetization step (P32) comprises initializing remanent magnetization created in the rotating shaft (11) by steps prior to the demagnetization step.

3. The method of claim 1, further comprising, after the demagnetization step (P32), a step of providing sensor means around the peripheries of the magnetostrictive films (14A, 14B) for sensing changes in the magnetostrictive characteristics of the magnetostrictive films (14A, 14B) upon application of a torque to the rotating shaft.

**Patentansprüche**

1. Verfahren zum Herstellen eines magnetostriktiven Drehmomentsensors, umfassend die Schritte von:

Bilden, durch Galvanisieren, magnetostriktiver Schichten (14A, 14B) auf einer Drehwelle (11) des magnetostriktiven Sensors; und

Erzeugen einer magnetischen Anisotropie in den auf der Drehwelle (11) gebildeten magnetostriktiven Schichten (14A, 14B), durch Heizen der magnetostriktiven Schichten (14A, 14B) für eine vorbestimmte Zeit, mit einem vorbestimmten Verdrehmoment (Tq), das auf die Schichten angewendet ist, und dann Freigeben des Drehmoments;

**dadurch gekennzeichnet, dass** das Verfahren nach dem Schritt des Bildens der magnetostriktiven Schichten (P1) und vor dem Schritt des Erzeugens der magnetischen Anisotropie (P2) ferner einen Schritt (P32) eines Entmagnetisierens der Drehwelle (11) umfasst.

2. Verfahren nach Anspruch 1, wobei der Entmagnetisierungsschritt (P32) ein Initialisieren einer in der Drehwelle (11) erzeugten remanenten Magnetisierung umfasst, durch Schritte vor dem Entmagnetisierungsschritt.

3. Verfahren nach Anspruch 1, ferner umfassend, nach dem Entmagnetisierungsschritt (P32), einen Schritt eines Bereitstellens von Sensormitteln um die Randbereiche der magnetostriktiven Schichten (14A, 14B) zum Fühlen von Veränderungen in den magnetostriktiven Eigenschaften der magnetostriktiven Schichten (14A, 14B) bei Anwendung eines Drehmoments auf die Drehwelle.

**Revendications**

1. Procédé de fabrication d'un capteur de couple magnétostrictif, comprenant les étapes de :

formation, par électroplaquage, de films magnétostrictifs (14A, 14B) sur un arbre rotatif (11) du capteur magnétostrictif ; et

création d'une anisotropie magnétique dans les films magnétostrictifs (14A, 14B) formés sur l'arbre rotatif (11) par chauffage pendant un temps prédéterminé des films magnétostrictifs (14A, 14B) avec un couple de torsion prédéterminé (Tq) appliqué aux films puis libération du couple de torsion ;

**caractérisé en ce que** le procédé comprend en outre, après l'étape de formation des films magnétostrictifs (P1) et avant l'étape de création d'anisotropie magnétique (P2), l'étape (P32) de désaimantation de l'arbre rotatif (11).

2. Procédé selon la revendication 1, dans lequel l'étape de désaimantation (P32) comprend l'initialisation d'une aimantation rémanente créée dans l'arbre rotatif (11) par des étapes avant l'étape de désaimantation.

3. Procédé selon la revendication 1, comprenant en outre, après l'étape de désaimantation (P32), une étape de fourniture de moyens de capteur autour des périphéries des films magnétostrictifs (14A, 14B) permettant de détecter des changements dans les caractéristiques magnétostrictives des films magnétostrictifs (14A, 14B) lors de l'application d'un couple à l'arbre rotatif.

# FIG.1

# FIG.2

EP 1 770 383 B1

# FIG.3

14

# FIG.4

# FIG.5

S11 —— PREPARATORY PROCESS

S12 —— ELECTROPLATING

S13 —— DRYING

⎫
⎬ P1
⎭

S21 —— HIGH-FREQUENCY HEATING OF TOP PLATING

S22 —— HIGH-FREQUENCY HEATING OF BOTTOM PLATING

⋯ P2

P31 —— ANNEALING

P32 —— DEMAGNETIZATION

⋯ P3

TESTING STEP —— P4

# FIG.6

START

S201 —— TORQUE APPLICATION

S202 —— HEATING PROCESS

S203 —— COOLING

S204 —— TORQUE RELEASING

END

# FIG.7A    FIG.7B    FIG.7C    FIG.7D

# FIG.8

# FIG.9A

# FIG.9B

# FIG.10

# FIG.11

# FIG.12

TIME

# FIG.13

TIME

# FIG.14

MAGNETIZATION M

MAGNETIC FIELD H

# FIG.15

▨ AFTER ANNEALING
☐ AFTER DEMAGNETIZATION

Cp

3.0
2.5
2.0
1.5
1.0
0.5
0.0

B20
B21
B10
B11

14A
14B
PLATING

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002082000 A

- JP 1123487 A